# EUROPÄISCHE PATENTSCHRIFT

(11) **EP 0 837 893 B1**
(45) Veröffentlichungstag und Bekanntmachung des Hinweises auf die Patenterteilung: **28.11.2001**
(21) Anmeldenummer: 96924858.2
(22) Anmeldetag: 03.07.1996
(51) Int. Cl.: C08G 64/02, C08G 18/44

(54) **HERSTELLUNG UND VERWENDUNG FLÜSSIGER OLIGOCARBONATE AUS DIMERDIOL**
PRODUCTION AND USE OF LIQUID OLIGOCARBONATES DERIVED FROM DIMER DIOLS
PRODUCTION ET UTILISATION D'OLIGOCARBONATES LIQUIDES DERIVES DE DIOLS DIMERES

(30) Priorität: 12.07.1995 DE 19525406
(43) Veröffentlichungstag der Anmeldung: 29.04.1998
(73) Patentinhaber: Cognis Deutschland GmbH, 40589 Düsseldorf (DE)
(72) Erfinder: GRÜTZMACHER, Roland, D-42489 Wülfrath (DE); WESTFECHTEL, Alfred, D-40724 Hilden (DE)
(86) Internationale Anmeldenummer: EP9602903
(87) Internationale Veröffentlichungsnummer: WO9703104

(56) Entgegenhaltungen:
- WO-A-92/15749
- FR-A- 1 432 239

## Beschreibung

### Gebiet der Erfindung

Die Erfindung betrifft flüssige bis hochviskose Oligo- und Polycarbonate die als Polyolkomponente Polyole mit mehr als 20 C-Atomen, insbesondere sogenannte Dimerdiole oder deren kommerziell erhältliche technische Gemische enthalten, sowie die Herstellung solcher Polycarbonate. Weiterhin betrifft die Erfindung die Verwendung solcher Oligo- und Polycarbonate in Kunststoffen.

### Stand der Technik

Die Verwendung von Kunststoffen und Kunststoffprodukten in immer mehr Bereichen des täglichen Lebens hat dazu geführt, daß immer höhere Anforderungen bezüglich der Beständigkeit solcher Stoffe gegenüber aggressiven Medien gestellt werden. Zum einen sollen Kunststoffe gegenüber wäßrigen Säuren und Laugen weitgehend resistent sein, zum anderen sollen sie jedoch auch gegenüber organischen Lösungsmitteln eine möglichst hohe Beständigkeit zeigen. Einen Weg zur Realisierung dieser Eigenschaften stellt beispielsweise die Verwendung von Dimerdiolen und/oder Trimertriolen in Kunststoffen dar.

So beschreibt die **DE-OS-16 94 957** ein Verfahren zur Herstellung von Polyurethanschaumstoffen, in dem Polyisocyanate mit solchen Dimerdiole und/oder Trimertriole enthaltenden Polyestern umgesetzt werden.

Die **DE-OS-19 25 349** betrifft ebenfalls den Einbau von Dimerdiolen und/oder Trimertriolen in Polyester, die anschließend mit Isocyanaten zu Polyurethanen umgesetzt werden. Die entstehenden Polyurethane wurden lediglich auf ihre elektrischen Eigenschaften untersucht, über Hydrolysestabilität sowie Stabilität gegenüber organischen Lösungsmitteln ist nichts bekannt.

Die **DE-A1-43 08 100** beschreibt die Verwendung von Dimerdiolen in Polyurethangießharzen und Beschichtungsmassen. Die Druckschrift lehrt, daß ein Anteil von 10 Gew.-% an Dimerdiol am gesamten Polyolgewicht die Hydrolysestabilität von Polyester-Polyurethangießharzen verbessert. Über die Stabilität der Polyurethane gegenüber organischen Lösungsmitteln sagt die Druckschrift nichts aus.

Mit zunehmendem Anteil an hydrophoben Gruppen steigt zwar die Hydrolysestabilität von Polymeren an, gleichzeitig ergibt sich jedoch auch eine höhere Empfindlichkeit gegenüber einem Angriff organischer Lösungsmittel wie beispielsweise Aceton, Mineralölen oder synthetischen Estern. Dies kann dazu führen, daß hydrophobe Gruppen enthaltende Polymere in Anwendung, die wechselnde Anforderungen an die Belastbarkeit des Polymeren stellen, nicht zum Einsatz geeignet sind.

Es besteht daher ein Bedarf nach solchen hydrophoben Kunststoffen, insbesondere Polyurethanen, die zum einen eine hohe Hydrolysestabilität gegenüber wäßrigen Säuren und Alkalien, zum anderen aber auch eine hervorragende Beständigkeit gegenüber organischen Solventien zeigen.

Ziel der Erfindung war es daher, Polymere mit möglichst großer Hydrolysestabilität und gleichzeitig möglichst hoher Resistenz gegenüber organischen Lösungsmitteln herzustellen.

Überraschenderweise wurde nun gefunden, daß Polycarbonate aus Dimerdiolen mit 36 bis 44 C-Atomen und einem entsprechenden Derivat der Kohlensäure Oligo- und Polymere ergeben, die sich in Abhängigkeit von ihren Endgruppen durch Polykondensation, Polyaddition oder Polymerisation zu Kunststoffen umsetzen lassen, die sowohl über eine hohe Hydrolysestabilität als auch über eine ausgezeichnete Resistenz gegenüber organischen Lösungsmitteln verfügen.

### Beschreibung der Erfindung

Gegenstand der Erfindung sind Oligo- oder Polymere der allgemeinen Formel 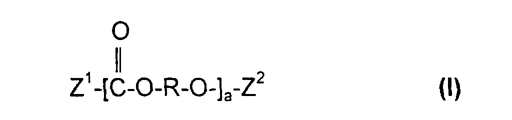 wobei
- Z1 :: für HO-R-O, Aryl-X, Alkyl-X, XH oder Hal,
- Z² :: für Wasserstoff, X-Aryl, 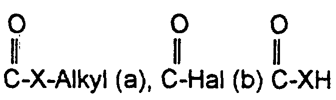 oder 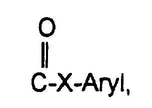
- a :: für eine ganze Zahl zwischen 2 und 10.000,
- Hal:: für Chlor oder Brom,
- X :: für ein Schwefel- oder Sauerstoffatom und
- R :: für ein Alkylenradikal eines Dimerdiols mit 36 bis 44 C-Atomen,
steht.

Als flüssig- bis hochviskos im Sinne der Erfindung werden solche Polymere bezeichnet, die bei Raumtemperatur eine Brookfieldviskosität zwischen 2.000 und 100.000 cps aufweisen. Erfindungsgemäß bevorzugt sind solche Oligo- oder Polymere, deren Brookfieldviskosität in einem Bereich von 10.000 bis 50.000 cps, insbesondere bevorzugt zwischen 15.000 und 25.000 cps liegt.

Unter Oligo- bzw. Polymeren werden solche Verbindungen verstanden, die einen Polymerisationsgrad von mindestens 2, d. h. mindestens zwei monomere Repetitionseinheiten aufweisen. Erfindungsgemäß sind damit solche Polymere, die einen Polymerisationsgrad zwischen 2 und 10.000 bevorzugt zwischen 3 und 100 und insbesondere bevorzugt zwischen 3 und 10 aufweisen.

Die erfindungsgemäßen Polymere können beispielsweise durch Umsetzen von Diolen oder Polyolen mit den Estern oder Thioestern der Kohlensäure oder deren Mono- oder Dihalogenid hergestellt werden. Bei den Estem der Kohlensäure handelt es sich um Verbindungen der Formel 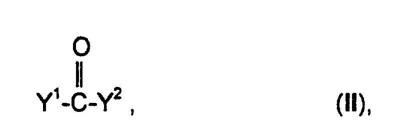 wobei Y¹ und Y² unabhängig voneinander ein Halogenatom, ein Phenol, ein Thiol, ein primärer, sekundärer oder tertiärer Alkohol, oder ein primäres, sekundärers oder tertiäres Mercaptan sein können. Bevorzugt sind solche Phenole, Thiole, Alkohole und Mercaptane, die sich nach erfolgter Reaktion leicht wieder aus dem Reaktionsgemisch entfernen lassen. Ein weiteres Kriterium für die Auswahl der Estergruppe im Carbonat ist ihre Fähigkeit, eine Umesterungsreaktion einzugehen.

Zur Herstellung der Kohlensäurediester der Formel II wird Phosgen bei höherer Temperatur in Alkohol eingeleitet. Im Fall der Phenole kann man diese selbst (auch in Lösung), gewünschtenfalls in Gegenwart tertiärer Basen einsetzen oder Phosgen in eine wäßrige Lösung der Natriumphenolate einleiten. Auch die Verwendung von Katalysatoren (z. B. Al, Fe, Zn oder deren Salze) für die Reaktion von Phosgen mit Phenolen ist möglich. Eine weitere Darstellungsmöglichkeit bietet die Umsetzung von Phenolen mit Kohlenmonoxid und Sauerstoff bei üblicherweise 30 - 200°C und einem Druck von in der Regel 5 - 25 bar. Die Umsetzung wird in Gegenwart von Katalysatoren durchgeführt.

Beispiele für geeignete Phenole für eines der beiden Verfahren sind das Phenol, 2-Methylphenol, 3-Methylphenol, p-Methylphenol, 3,5-Dimethylphenol, Ethylphenol, Benzylphenol, Nonylphenol und der Hydrochinonmonomethylether. Als geeignete Thiophenole sind die entsprechenden Verbindungen einsetzbar, bei denen das Sauerstoffatom gegen ein Schwefelatom ausgetauscht wurde wobei beachtet werden muß, daß beim Einsatz von Edelmetallkatalysatoren die Thiophenole zu einer deutlich verminderten katalytischen Wirkung führen können. Als aromatischer Alkohol ist erfindungsgemäß das Phenol bevorzugt.

Beispiele für Alkohole und Mercaptane sind Methanol, Ethanol, Propanol, Butanol, iso-Butanol, tert-Butanol, Pentanol, iso-pentanol, Hexanol, Heptanol, Octanol, Ethylhexanol, Iso-decanol, Methylmercaptan, Ethylmercaptan, Propylmercaptan, Butylmercaptan, Pentylmercaptan und Hexylmercaptan, wobei erfindungsgemäß die monofunktionellen, linearen Alkohole wie Methanol, Ethanol, Propanol und Butanol bevorzugt eingesetzt werden.

Es können jedoch in der Regel auch solche linearen oder verzweigten Alkohole eingesetzt werden, deren Wasserstoffatome in der Alkylkette ganz oder teilweise, insbesondere durch Halogene substituiert sind. Unter den Halogenen hat sich in der Regel Chlor als wirkungsvoller Substituent in solchen Alkoholen erwiesen. Zu den so erfindungsgemäß einsetzbaren Alkoholen zählt beispielsweise das Trichlormethanol.

Neben den angesprochenen Alkoholen, Phenolen, Mercaptanen und Thiolen kann Y selbstverständlich auch für Halogene stehen. Insbesondere zählen hierzu das Brom und das Chlor, wobei erfindungsgemäß Chlor bevorzugt ist. Auch Monoester des Phosgens sind im Sinne der Erfindung einsetzbar. So kann beispielsweise jeweils Y¹ oder Y² ein Halogen oder ein Alkoholrest sein. Ein Beispiel hierfür ist der Chlorameisensäuretrichlormethylester, der auch unter dem Namen Diphosgen bekannt ist. In diesem Falle entspricht Y¹ Chlor und Y² einem Trichlormethanolrest. Gegenüber dem Analogon mit zwei Chloratomen, dem Phosgen, besitzt es den Vorteil einer besseren Handhabbarkeit durch einen deutlich höheren Siedepunkt.
Weiterhin sind für Y¹ und Y² alle solchen Reste möglich, die mit Diolen eine geeignete, zu oligo- oder polymeren Materialien führende Reaktion eingehen.

Als weitere Reaktionskomponente werden zur Darstellung der erfindungsgemäßen Oligo oder Polymere Diole der Formel

R(-OH)₂, (III)

eingesetzt, wobei R ein Alkylenradikal eines Dimerdiols mit 36 bis 44 C-Atomen darstellt, wie es üblicherweise die durch Dimerisierung ungesättigter Fettalkohole oder die durch Dimerisierung ungesättigter Fettsäuren und/oder Fettsäureester nach Reduktion erhältlichen Alkohole aufweisen.

Hierbei können neben den reinen Dimerdiolen auch technische Gemische zum Einsatz kommen, die wechselnde Anteile an Monoalkoholen und Trimertriolen enthalten. Hierbei können Werte zwischen 0,01 und 10 Gew.-%, bevorzugt 0,01 bis 2 Gew.-% Monoalkohol und 0,1 bis 10 Gew.-%, bevorzugt 0,1 bis 5 Gew.-% und insbesondere bevorzugt 0,1 bis 2 Gew.-% Trimertriol im Gemisch enthalten sein.

Die erfindungsgemäßen Oligo- und Polymere der Formel 1 lassen sich in der Regel durch die Reaktion von Carbonylverbindungen der Formel **II** mit Diolen der Formel **III** darstellen. Setzt man als Carbonylverbindung Phosgen oder Diphosgen ein, so läßt sich das Reaktionsprodukt üblicherweise ohne, oder durch nur geringe Erhöhung der Reaktionstemperatur erhalten. Wird der Einsatz von flüssigem Phosgen gewünscht, so ist es in der Regel üblich den Ansatz zu kühlen. Gegebenenfalls kann beim Ausbleiben einer ausreichend hohen Reaktionsgeschwindigkeit leicht erwärmt werden, wobei Temperaturen zwischen 30 und 60, insbesondere zwischen 40 und 50° C bevorzugt sind. Zum Abfangen der beim Umsatz mit Phosgen oder Diphosgen erzeugten Salzsäure, kann dem Reaktionsgemisch eine Base organischen oder anorganischen Ursprungs zugegeben werden. Insbesondere sind hierbei die aromatischen und aliphatischen Amine wie beispielsweise Dimethylanilin oder N-Methylmorpholin bevorzugt. Ebenso möglich ist der Einsatz hetrozyklischer, organischer Basen, wie beispielsweise Pyridin, Dimethylaminopyridin (DMAP) oder Diazabicycloundecen (DBU). Ebenso möglich ist selbstverständlich der Einsatz anorganischer Basen in wäßriger Lösung, wie beispielsweise NaOH in Wasser, wobei der Einsatz solcher wässrigen Basen üblicherweise erst nach Vollendung der Reaktion vollzogen wird.

Setzt man als Carbonylverbindung Diester oder Dithioester ein, so können als Katalysatoren auch stärkerer Basen wie beispielsweise Alkalihydroxyde, Alkalicarboxylate, Alkalisulfonate und/oder Alkalialkoholate eingesetzt werden. Bevorzugt ist in der Regel jedoch der Einsatz von Übergangsmetallalkoxylaten, insbesondere Titanalkoxylaten als Katalysatoren. Erfindungsgemäß ganz besonders bevorzugt ist hierbei der Einsatz von Tetraisopropyltitanat.

Gegenstand der vorliegenden Erfindung ist daher auch ein Verfahren zur Darstellung oligo- oder polymerer Verbindungen der Formel **I**, in dem Carbonylverbindungen der Formel **II** und Polyole der Formel **III** gegebenenfalls unter Anwesenheit eines Katalysators bei Temperaturen zwischen 60 und 200 ° C bevorzugt zwischen 100 und 180 ° C zur Reaktion gebracht werden.

Das Verhältnis von Carbonylverbindungen (**II**) zu Polyolen (**III**) kann dabei zwischen 1 : 3 und 3 : 1, bevorzugt zwischen 1 : 1,5 und 1,5 : 1 und insbesondere bevorzugt zwischen 1 : 1,1 und 1,1 :1 liegen.

In Abhängigkeit von der Stöchiometrie der Edukte kann das Entstehen Oligo- bzw. Polymere unterschiedliche Endgruppen aufweisen.

So kann beispielsweise im Falle A ein Überschuß an Diol dazu führen, daß die Gruppen Z¹ und Z² in Formel 1 für HO-R-O und Wasserstoff stehen, unabhängig davon welche Carbonylverbindung eingesetzt wird.

Setzt man im Fall B als Carbonylverbindung der Formel **II** 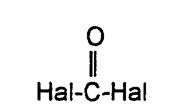 im Überschuß ein, so erhält das entstehende Oligo- oder Polymer Endgruppen Z¹ und Z² der Form

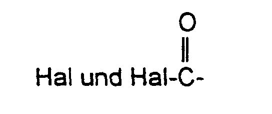

Setzt man im Fall C als Carbonylverbindung der Formel **II** 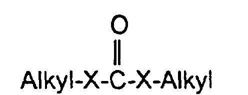 im Überschuß ein, so erhält das entstehende Oligo- oder Polymer Endgruppen Z¹ und Z² der Form 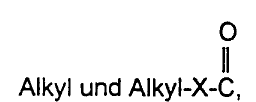 wobei X Schwefel oder Sauerstoff bedeuten kann.

Entsprechend kann im Fall D beim Einsatz equivalenter Mengen Carbonylverbindung und Diol mit dem Auftreten gemischter Endgruppen wie beispielsweise für Z¹ und Z² 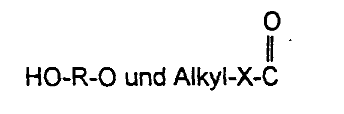 gerechnet werden.

Sind im Oligo- oder Polymeren hochreaktive Endgruppen wie beispielsweise im Fall B vorhanden, so kann durch Hydrolyse mit Wasser eine Dicarbonsäure dargestellt werden, in der Z¹ und Z² die Form 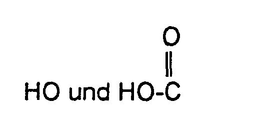 annehmen. Durch diese Variation der Endgruppen ist es möglich, das Oligo- oder Polymere mit weiteren Monomeren zu hochmolekularen Kunststoffen zu verarbeiten.

Erfindungsgemäß bevorzugt sind Produkte, bei denen
- Z¹: für Aryl-X oder Alkyl-X und Z² für 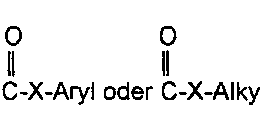
steht.

Erfindungsgemäß besonders bevorzugt sind jedoch solche Reaktionsprodukte bei denen Z¹ für HO-R-O und Z² für Wasserstoff steht.

Diese Reaktionsprodukte weisen bevorzugt eine Hydroxylzahl zwischen 0,1 und 150, insbesondere bevorzugt zwischen 20 und 70 auf.

So können beispielsweise die erfindungsgemäßen Oligo- oder Polymere der Formel 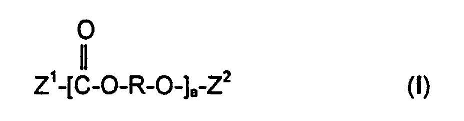 deren Reste Z¹ für Aryl-X, Alkyl-X, Hal und/oder XH und Z² für 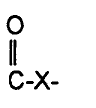 Aryl, 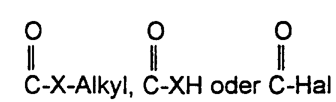 stehen, mit mono- oder
polyfunktionellen Alkoholen und/oder Aminen
oder
deren Reste Z¹ für HO-R-O und Z² für Wasserstoff stehen,
mit mono und/oder difunktionellen Carbonsäuren, Carbonsäurehalogeniden, Carbonsäureestem, Isocyanaten oder Epoxiden zu hochmolekularen Kunststoffprodukten umgesetzt werden. Insbesondere bevorzugt ist dabei die Umsetzung solcher Produkte, die über zwei reaktive Wasserstoffatome verfügen, wie sie üblicherweise nach der Zerwittinoff-Methode als Methan bestimmbar sind, mit Isocyanaten zu Polyurethanen.

Beispielsweise seien als geeignete Isocyanate genannt 1,5 Naphtylendiisocyanat, 4,4-Diphenylmethandiisocyanat (MDI), hydriertes MDI (H₁₂ MDI), Xylylendiisocyanat (XDI), Tetramethylxyloldiisocyanat (TMXDI), Di- und Tetraalkyldiphenylmethandiisocyanat, 4,4'-Dibenzyldiisocyanat, 1,3-Phenylendiisocyanat, 1,4-Phenylendiisocyanat, die Isomere des Toluylendiisocyanats (TDI), gegebenenfalls in Mischung, 1-Methyl-2,4-diisocyanatocyclohexan, 1,6-Diisocyanato-2,2,4-trimethylhexan, 1-Isocyanatomethyl-3-isocyanato-1,5,5-trimethyl-cylohexan, chlorierte und bromierte Diisocyanate, phosphorhaltige Diisocyanate, Tetramethoxybutan-1,4-diisocyanat, Tetramethylen-1,4-diiso-cyanat, Pentamethylen-1,4-diisocyanat, Hexamethylen-1,4-diisocyanat (HDI), Phthalsäure-bis(isocyanatoethylester), Dicyclohexylmethandiisocyanat, 1,12-Diisocyanatododecan und Dimerfettsäurediisocyanat.

Als Dimerfettsäure bezeichnet man ein Gemisch von überwiegend C₃₆-Carbonsäuren, das durch thermische oder katalytische Dimerisierung ungesättigter C₁₈-Monocarbonsäuren, wie Ölsäure, Tallölfettsäure oder Linolsäure hergestellt wird. Die Dimerfettsäure läßt sich zu Dimerfettsäurediisocyanaten mit im Mittel zwei Isocyanatgruppen pro Molekül umsetzen.

Neben den niedermolekularen Polyisocyanaten können auch die sogenannten kettenverlängerten Isocyanate zum Einsatz gelangen. Diese Polyisocyanate sind beispielsweise erhältlich durch Umsetzen eines bevorzugt difunktionellen Alkohols mit einem bevorzugt difunktionellen Diisocyanat, wobei das Diisocyanat im Überschuß eingesetzt wird.

Anstatt der reinen Komponenten können auch technische Produkte zum Einsatz kommen, die neben difunktionellen Molekülen auch noch solche mit höheren oder niedrigeren Funktionalitäten, beispielsweise 1 oder 3, beinhalten. Bevorzugt sind jedoch solche Produkte, deren Hauptanteil aus difunktionellen Molekülen besteht, so daß die Mischung als im Mittel difunktionell bezeichnet werden kann.

Die erfindungsgemäß hergestellten Polyurethane verfügen über eine hervorragende Hydrolysebeständigkeit, sowie eine außergewöhnlich hohe Resistenz gegen organische Lösungsmittel. Hierunter fallen insbesondere natürliche und synthetische Terpenkohlenkohlenwasserstoffe, natürliche und synthetische Ester kurz-, mittel- oder langkettiger Fettsäuren, sowie die niedermolkularen, flüssigen Ketone wie beispielsweise Aceton, Methylethylketon und Methyl-tert-butylketon.

### Beispiele

### Herstellung von Dimerdiolpolycarbonat

375 g Dimeralkohol (Sovermol® POL 900, Fa. Henkel) werden mit 58 g Dimethylcarbonat versetzt. Nach Zugabe von 0,4 g Tetraisopropyltitanat wird auf 100 - 120 °C erhitzt, wobei ein Gemisch aus Dimethylcarbonat und methanol Überdestilliert. Die Reaktionstemperatur wird langsam auf 140°C gesteigert. Wenn kein Destillat mehr anfällt, wird im Vakuum (20 mbar) 30 min lang auf 200°C erhitzt.

Das entstehende Polymere hat eine OH-Zahl von 70 und eine Viskosität von 20.000 cps (Brookfield, 25°C)

### Beispiel:

Dieses Präpolymere wurde in bekannter Weise equimolar mit Desmodur® VL zum Polyurethan umgesetzt.

### Vergleichsbeispiel:

Zum Vergleich wurde als Präpolymeres ein Polycarbonat, mit Hexandiol als Diolkomponente (Desmophen® C 200, Fa. Bayer), in gleicher Weise equimolar mit Desmodur® VL zum Polyurethan umgesetzt.

Die Chemikalienbeständigkeit der Produkte gegenüber Aceton wurde bei Raumtemperatur anhand der Gewichtsveränderung von Normstäben beim Lagern im Lösungsmittel überprüft.

Tabelle1: Angegeben ist die Gewichtsveränderung in %.

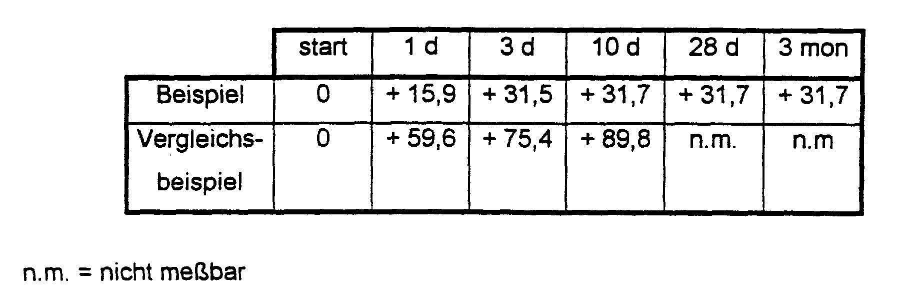

Auf die gleiche Weise wurde die Shore-Härte der Normstäbe bestimmt

Tabelle 2: Angegeben sind die Shore-Härten

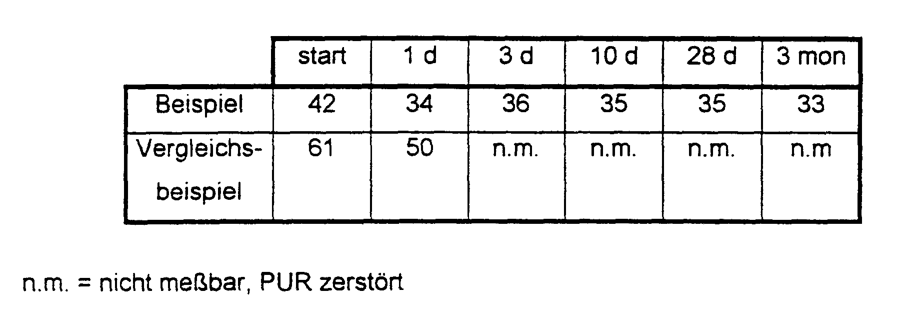

## Patentansprüche

1. Oligo- oder Polymere der allgemeinen Formel 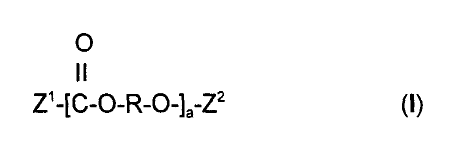 wobei
Z1 : für HO-R-O, Aryl-X, Alkyl-X, XH oder Hal,
Z² : für 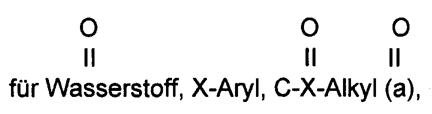 C-Hal (b) C-XH oder 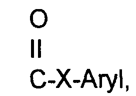
R : für ein Alkenylradikal eines Dimerdiols mit 36 bis 44 C-Atomen, wie es üblicherweise die durch Dimerisierung ungesättigter Fettalkohole oder die durch Dimerisierung ungesättigter Fettsäuren und/oder Fettsäureester durch Reduktion erhältlichen Alkohole aufweisen,
a : für eine ganze Zahl zwischen 2 und 10.000,
Hal: für Chlor oder Brom und
X : für ein Schwefel- oder Sauerstoffatom
steht.

2. Verbindungen nach Anspruch 1, **dadurch gekennzeichnet, daß** Z¹ für HO-R-O und Z² für Wasserstoff steht.

3. Verbindungen nach Anspruch 1 oder 2, **dadurch gekennzeichnet, daß**
Z¹ für Aryl-X oder 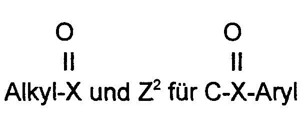 oder C-X-Alkyl steht.

4. Verbindungen nach einem der Ansprüche 1 bis 3, **dadurch gekennzeichnet, daß** sie eine Hydroxylzahl zwischen 0,1 und 100, bevorzugt zwischen 20 und 70 aufweisen.

5. Verfahren zur Darstellung oligo- oder polymerer Verbindungen der Formel **I** nach einem der Ansprüche 1 bis 4, **dadurch gekennzeichnet, daß** Carbonylverbindungen der Formel 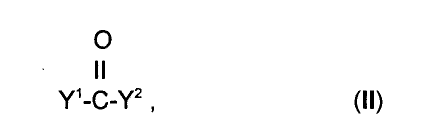 wobei Y¹ und Y² unabhängig voneinander Hal, Aryl-X oder Alkyl-X sein können, und Polyole der Formel
R(-OH)₂, (III)
wobei R die oben genannte Bedeutung hat, gegebenenfalls unter Anwesenheit eines Katalysators bei Temperaturen zwischen 60 und 200 °C, bevorzugt zwischen 100 und 180°C zur Reaktion gebracht werden.

6. Verfahren nach Anspruch 5, **dadurch gekennzeichnet, daß** das Verhältnis von Carbonylverbindungen (II) zu Polyolen (III) zwischen 1:3 und 3:1, bevorzugt zwischen 1:1,5 und 1,5:1 und insbesondere bevorzugt zwischen 1:1,1 und 1,1:1 liegt.

7. Verfahren nach einem der Ansprüche 5 oder 6, **dadurch gekennzeichnet, daß** als Katalysatoren Alkalihydroxyde, Alkalicarboxylate, Alkalisulfonate und/oder Alkali-alkoholate eingesetzt werden.

8. Verfahren nach einem der Ansprüche 5 oder 6, **dadurch gekennzeichnet, daß** als Katalysatoren Übergangsmetallalkoxylate, insbesondere Titanalkoxylate eingesetzt werden.

9. Verwendung von Oligo- oder Polymeren nach einem der Ansprüche 1 bis 4 zur Herstellung von Kunststoffen, insbesondere von Polyurethanen.

## Claims

1. Oligomers or polymers corresponding to the following general formula: 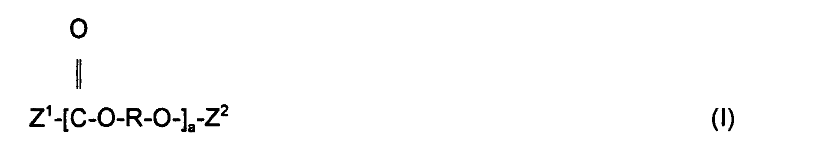 in which
Z¹ represents HO-R-O, aryl-X, alkyl-X, XH or Hal,
Z² represents hydrogen, X-aryl, 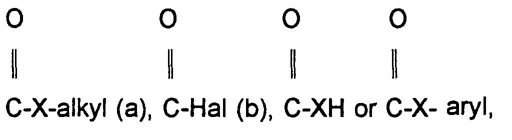
R is an alkylene radical of a dimer diol containing 36 to 44 carbon atoms as normally present in the alcohols obtainable by dimerization of unsaturated fatty alcohols or in the alcohols obtainable by dimerization of unsaturated fatty acids and/or fatty acid esters after reduction.
a is an interger of 2 to 10,000,
Hal represents chlorine or bromine,
X is a sulfur or oxygen atom.

2. Compounds as claimed in claim 1, **characterized in that** Z¹ stands for HO-R-O while Z² stands for hydrogen.

3. Compounds as claimed in claim 1 or 2, **characterized in that** Z¹ stands for aryl-X or alkyl-X while Z² stands for

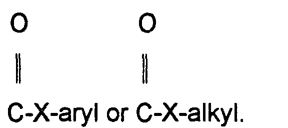

4. Compounds as claimed in any of claims 1 to 3, **characterized in that** they have a hydroxyl value of 0.1 to 100 and preferably 10 to 60.

5. A process for the production of the oligomeric or polymeric compounds of formula **I** claimed in any of claims 1 to 4, **characterized in that** carbonyl compounds corresponding to formula (**II**): 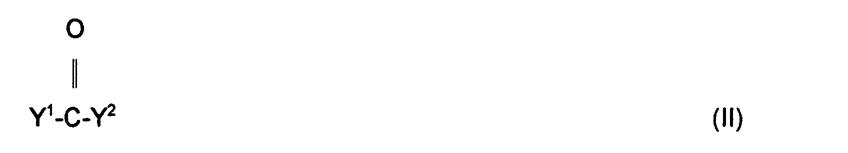 in which Y¹ and Y² independently of one another may represent Hal, aryl-X or alkyl-X,
and polyols corresponding to formula (**III**):
R(-OH)₂ (III)
in which R is as previously defined,
are reacted, optionally in the presence of a catalyst, at temperatures of 60 to 200°C and preferably at temperatures of 100 to 180°C.

6. A process as claimed in claim 5, **characterized in that** the ratio of carbonyl compounds (**II**) to polyols (**III**) is between 1:3 and 3:1, preferably between 1:1.5 and 1.5:1 and more preferably between 1:1.1 and 1.1:1.

7. A process as claimed in claim 5 or 6, **characterized in that** alkali metal hydroxides, alkali metal carboxylates, alkali metal sulfonates and/or alkali metal alcoholates are used as catalysts.

8. A process as claimed in claim 5 or 6, **characterized in that** transition metal alkoxylates, more particularly titanium alkoxylates, are used as catalysts.

9. The use of the oligomers or polymers claimed in any of claims 1 to 4 for the production of plastics, particularly polyurethanes.

## Revendications

1. Oligo- ou polymères de formule générale 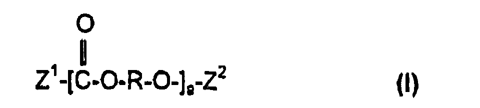 dans laquelle
Z¹ : représente HO-R-O, aryl-X, alkyl-X, XH ou Hal,
Z² représente un hydrogène, ou X-Aryl, 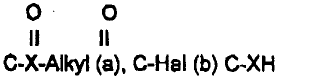 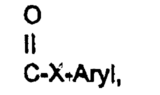
R représente un radical alkylène d'un diol dimère comportant de 36 à 44 atomes de carbone, comme en présentent habituellement les alcools que l'on peut obtenir par dimérisation d'alcools gras inisaturés ou ceux que l'on peut obtenir par dimérisation d'acides gras et/ou d'esters d'acides gras insaturés par réduction,
a représente un nombre entier compris entre 2 et 10 000,
Hal représente le chlore ou le brome,
x représente un atome de soufre ou d'oxygène.

2. Composés selon la revendication 1,
**caractérisés en ce que**
Z¹ représente HO-R-O et Z² représente un hydrogène.

3. Composés selon la revendication 1 ou 2,
**caractérisés en ce que**
Z¹ représente aryl-X ou ou 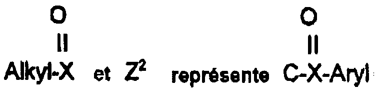 ou C-X-Alkyl

4. Composés selon l'une des revendications 1 à 3,
**caractérisés en ce qu'**
ils présentent un indice d'hydroxyle compris entre 0 et 100, de préférence entre 20 et 70.

5. Procédé de production de composés oligo- ou polymères de formule I selon l'une des revendications 1 à 4,
**caractérisé en ce qu'**
on fait réagir des composés carbonyle de formule 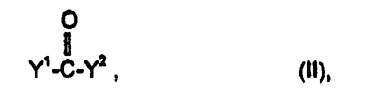 dans laquelle Y¹ et Y² peuvent représenter indépendamment l'un de l'autre Hal, aryl-X ou alkyl-X, et les polyols de formule
R(-OH)₂, (III)
dans laquelle R a la signification donnée ci-dessus, le cas échéant en présence d'un catalyseur, à des températures comprises entre 60 et 200°C, de préférence entre 100 et 180°C.

6. Procédé selon la revendication 5,
**caractérisé en ce que**
le rapport des composés carbonyle (II) et les polyols (III) se situent entre 1:3 et 3:1, de préférence entre 1:1,5 et 1,5:1, et en particulier de préférence entre 1:1,1 et 1,1:1.

7. Procédé selon l'une des revendications 5 ou 6,
**caractérisé en ce qu'**
on utilise comme catalyseurs des hydroxydes de métaux alcalins, des carboxylates de métaux alcalins, des sulfonates de métaux alcalins et/ou des alcoolates de métaux alcalins.

8. Procédé selon l'une des revendications 5 ou 6,
**caractérisé en ce qu'**
on utilise comme catalyseurs des alcooxylates de métaux de transition, en particulier des alcooxylates de titane.

9. Utilisation d'oligo- ou de polymères selon l'une des revendications 1 à 4 pour la production de matières synthétiques, en particulier de polyuréthanes.
